# FASCICULE DE BREVET EUROPEEN

(11) **EP 4 255 721 B1**
(45) Date de publication et mention de la délivrance du brevet: **24.06.2026**
(21) Numéro de dépôt: 21823976.2
(22) Date de dépôt: 22.11.2021
(51) Int. Cl.: B29C 70/24, B29C 70/54, B29D 99/00, B29B 11/16, B29C 70/22, F01D 5/28, B29L 31/08, B29L 31/00

(54) **PROCÉDÉS DE FABRICATION D'UNE AUBE EN MATERIAU COMPOSITE AVEC PLATEFORMES ET PATTES DE FIXATION INTEGRÉES, ET AUBES RÉALISÉES PAR LESDITS PROCÉDÉS**
VERFAHREN ZUR HERSTELLUNG EINER LEITSCHAUFEL AUS EINEM VERBUNDSTOFF MIT INTEGRIERTEN PLATTFORMEN UND BEFESTIGUNGSLASCHEN SOWIE MIT DIESEN VERFAHREN HERGESTELLTEN LEITSCHAUFELN
METHODS FOR MANUFACTURING A COMPOSITE MATERIAL BLADE WITH INTEGRATED PLATFORMS AND MOUNTING BRACKETS, AND BLADES PRODUCED BY SAID METHODS

(30) Priorité: 01.12.2020 FR 2012480
(43) Date de publication de la demande: 11.10.2023
(73) Titulaire: SAFRAN AIRCRAFT ENGINES, 75015 Paris (FR)
(72) Inventeur: MASSON, Antoine, Hubert, Marie, Jean, 77550 MOISSY-CRAMAYEL (FR); IGLESIAS CANO, Célia, 77550 MOISSY-CRAMAYEL (FR); LABORIEUX, Larry, Sylvio, 77550 MOISSY-CRAMAYEL (FR)
(74) Mandataire: Cabinet Beau de Loménie
(86) Numéro de dépôt international: PCT/FR2021/052066
(87) Numéro de publication internationale: WO 2022/117931

(56) Documents cités:
- WO-A1-2013/079860
- WO-A1-2016/174345

## Description

### Domaine Technique

La présente invention se rapporte au domaine général des aubes fixes ou stator pour moteur aéronautique à turbine à gaz de type aube directrice de sortie ou "OGV" (pour "outlet guide vane").

### Technique antérieure

Dans le domaine des moteurs aéronautiques, les aubes directrices de sortie peuvent être réalisées en matériau composite qui offre une résistance équivalente ou supérieure au métal mais avec une masse globale inférieure. Le document EP 3 186 486 décrit une aube directrice de redresseur en matériau composite pour moteur à turbine à gaz comprenant un renfort fibreux densifié par une matrice, le renfort fibreux étant formé en une seule pièce par tissage tridimensionnel avec une pale et des oreilles de fixation s'étendant depuis les extrémités radiales interne et externe de la pale vers des faces latérales opposées de ladite pale. Les documents WO 2013/079860 et 2016/174345 divulguent respectivement une aube fixe et une aube mobile en matériau composite.

Une aube directrice de sortie doit à la fois assurer le guidage aérodynamique de l'air, fonction pour laquelle la géométrie est primordiale, et assurer la fonction structurale de la pièce c'est-à-dire transférer les efforts du moteur entre le moyeu et les bielles de reprises. A cet effet l'aube est équipée de plateformes interne et externe pour la délimitation de la veine et la transmission des efforts.

En outre, l'aube doit être capable d'assurer ces deux fonctions principales après avoir subi des agressions externes (résidus d'ingestion post oiseaux, grêle, érosion...).

Les aubes directrices de sortie étant dans le chemin d'effort statique, elles sont soumises à une importante diversité de cas de chargements en traction, compression, torsion, flexion ainsi que toutes les combinaisons possibles associées. Il est donc important que les fixations de ces aubes permettent un comportement homogène quelle que soit la direction et le type de sollicitation.

Les fixations de type oreille s'étendent suivant un angle sensiblement perpendiculaire par rapport à l'axe longitudinale de la pale correspondant à la direction des fils de chaîne continus. Si les pièces en matériau composites présentent de très bonnes propriétés mécaniques dans les directions des fibres, ces propriétés peuvent être réduites dans les autres directions. Or, des fixations de type oreille impose en compression de travailler dans les directions non optimales du matériau composite.

Des études ont été réalisées pour analyser la tenue mécanique des aubes directrices de sortie dont la fixation est réalisée par des oreilles solidaires de la pale de l'aube. Les résultats ont montré une concentration systématique de contraintes au niveau des congés entre les oreilles et la pale pouvant aboutir à des initiations de fissures, de microfissurations matricielles ou de ruptures du matériau composite à cet endroit.

Or, il existe un besoin pour une aube directrice de sortie en matériau composite comprenant des plateformes intégrées qui ne présente pas de zones critiques dans ses points de fixation avec les autres éléments du moteur.

### Exposé de l'invention

A cet effet, l'invention propose un procédé de fabrication d'une aube fixe de turbomachine en matériau composite, le procédé comportant :
- la formation par tissage tridimensionnel ou multicouches entre une pluralité de couches de fils de chaîne et une pluralité de couches de fils de trame d'une ébauche fibreuse ayant un axe longitudinal correspondant à celui de la pale de l'aube à réaliser, l'ébauche fibreuse s'étendant entre des première et deuxième extrémités longitudinales, l'ébauche fibreuse étant séparée dans son épaisseur en des première, deuxième et troisième parties dans deux zones de déliaison respectivement présentes aux extrémités longitudinales de l'ébauche fibreuse, la première partie étant située entre la deuxième partie et la troisième partie auxquelles elle est reliée par tissage en dehors desdites zones de déliaison,
- la formation, à partir de l'ébauche fibreuse, d'une préforme de l'aube à réaliser, par dépliage, au niveau de chaque extrémité longitudinale et de part et d'autre de la première partie, des segments de la deuxième partie et des segments de la troisième partie non liés à la première partie, par mise en forme des segments dépliés de la deuxième partie et des segments dépliés de la troisième partie pour former des parties de préforme pour une plate-forme de l'aube à fabriquer au niveau de chaque extrémité longitudinale de l'ébauche fibreuse, les segments de la première partie non liés aux segments des deuxième et troisième parties s'étendant suivant l'axe longitudinal pour former une partie de préforme pour une patte de fixation de la pièce à fabriquer au niveau de chaque extrémité longitudinale de l'ébauche fibreuse,

- la densification de la préforme par une matrice pour obtenir une aube fixe de turbomachine en matériau composite ayant une plate-forme intégrée et une patte de fixation à chaque extrémité longitudinale alignée avec l'axe longitudinal de l'aube,
- un usinage des pattes de fixation à chaque extrémité longitudinale pour former des orifices de fixation.

Avec le procédé de l'invention, on obtient une aube ayant des pattes de fixation alignées avec l'axe longitudinal de l'aube. Cette architecture permet de supprimer tout rayon entre les pattes de fixation et le corps de l'aube. L'aube travaille ainsi au niveau de ses points de fixation seulement en traction et en compression, c'est-à-dire uniquement dans la direction des fils continus de chaîne du renfort fibreux de l'aube. L'aube ainsi obtenue présente une très bonne résistance vis-à-vis des reprises d'effort. En outre, la formation de pattes de fixation dans l'alignement du corps de l'aube facilite l'intégration des déliaisons nécessaire à la formation des plateformes.

Selon une caractéristique particulière du procédé de l'invention, des fils de chaîne présents dans la première partie en dehors des zones de déliaison sont déviés dans la deuxième ou troisième partie dans au moins une zone de déliaison. On augmente ainsi la résistance mécanique de la préforme fibreuse au niveau du fond des déliaisons

Selon une autre caractéristique particulière du procédé de l'invention, la première partie présente une épaisseur supérieure à l'épaisseur des deuxième et troisième parties. On renforce ainsi la résistance mécaniques des pattes de fixation qui contrairement aux plateformes est soumises à des efforts en traction et compression.

L'invention a également pour objet un procédé de fabrication d'une aube fixe de turbomachine en matériau composite, le procédé comportant :
- la formation par tissage tridimensionnel ou multicouches entre une pluralité de couches de fils de chaîne et une pluralité de couches de fils de trame d'une ébauche fibreuse ayant un axe longitudinal correspondant à celui de la pale de l'aube à réaliser, l'ébauche fibreuse s'étendant entre des première et deuxième extrémités longitudinales, l'ébauche fibreuse étant séparée dans son épaisseur en des première, deuxième et troisième parties dans une zone de déliaison s'étendant entre ses extrémités longitudinales, la première partie étant située entre la deuxième partie et la troisième partie auxquelles elle est reliée par tissage au niveau des extrémités longitudinales de l'ébauche fibreuse de manière à former deux portions de liaison,
- la découpe des deuxième et troisième parties pour diviser lesdites deuxième et troisième parties en deux segments chacune,
- la formation, à partir de l'ébauche fibreuse, d'une préforme de l'aube à réaliser, par dépliage, de part et d'autre de la première partie, des segments de la deuxième partie et des segments de la troisième partie non liés à la première partie, par mise en forme des segments dépliés de la deuxième partie et des segments dépliés de la troisième partie pour former des parties de préforme pour une plate-forme de l'aube à fabriquer au voisinage de chaque extrémité longitudinale de l'ébauche fibreuse, les deux portions de liaisons entre les première, deuxième et troisième parties s'étendant suivant l'axe longitudinal pour former une partie de préforme pour une patte de fixation de l'aube à fabriquer au niveau de chaque extrémité longitudinale de l'ébauche fibreuse,
- la densification de la préforme par une matrice pour obtenir une aube en matériau composite ayant une plate-forme intégrée et une patte de fixation à chaque extrémité longitudinale alignée avec l'axe longitudinal de l'aube,
- un usinage des pattes de fixation à chaque extrémité longitudinale pour former des orifices de fixation.

Avec le procédé de l'invention, on obtient une aube ayant des pattes de fixation alignées avec l'axe longitudinal de l'aube. Cette architecture permet de supprimer tout rayon entre les pattes de fixation et le corps de l'aube. L'aube travaille ainsi au niveau de ses points de fixation seulement en traction et en compression, c'est-à-dire uniquement dans la direction des fils continus de chaîne du renfort fibreux de l'aube. L'aube ainsi obtenue présente une très bonne résistance vis-à-vis des reprises d'effort, les portions les plus épaisses de l'aube correspondant aux pattes de fixations. En outre, la formation de pattes de fixation dans l'alignement du corps de l'aube facilite l'intégration des déliaisons nécessaire à la formation des plateformes.

Selon une caractéristique particulière du procédé de l'invention, des fils de chaîne présents dans la première partie dans au moins une portion de liaison sont déviés dans la deuxième ou troisième partie dans la zone de déliaison. On augmente ainsi la résistance mécanique de la préforme fibreuse au niveau du fond des déliaisons.

Selon une autre caractéristique particulière du procédé de l'invention, la première partie présente une épaisseur supérieure à l'épaisseur des deuxième et troisième parties. On renforce ainsi la résistance de la pale de l'aube qui est la partie de l'aube la plus exposée aux impacts avec des objets.

L'invention concerne en outre un aube fixe de turbomachine en matériau composite comprenant un renfort fibreux densifié par une matrice, l'aube ayant une pale s'étendant suivant un axe longitudinal et deux plates-formes solidaires de la pale et présentes respectivement au niveau des deux extrémités longitudinales de l'aube, de sorte que l'aube comprend en outre des première et deuxième pattes de fixation ayant des orifices de fixation usinés et présentes respectivement à chacune des extrémités longitudinales de l'aube et s'étendant suivant l'axe longitudinal et en ce que le renfort fibreux présente un tissage tridimensionnel ou multicouches, le renfort fibreux comprenant une partie de préforme de pale se divisant à chacune de ses extrémités longitudinales en deux demi-parties de préformes de plates-formes intérieure ou extérieure solidaires de la partie de préforme de pale et une partie de préforme de patte de fixation intérieure ou extérieure solidaire de la partie de préforme de pale, chaque partie de préforme de patte de fixation intérieure ou extérieure s'étendant suivant l'axe longitudinal entre les demi-parties de préformes de plates-formes intérieure ou extérieure.

Selon une caractéristique particulière du procédé de l'invention, des fils de chaîne présents dans la partie de préforme de pale du renfort fibreux sont déviés dans une demi-partie de préforme de plates-formes intérieure ou extérieure.

Selon une autre caractéristique particulière du procédé de l'invention, la partie de préforme de pale du renfort fibreux présente une épaisseur supérieure à l'épaisseur des demi-parties de préforme de plates-formes intérieure ou extérieure.

L'invention concerne encore une aube fixe de turbomachine en matériau composite comprenant un renfort fibreux densifié par une matrice, l'aube ayant une pale s'étendant dans un axe longitudinal et deux plates-formes solidaires de la pale et présentes respectivement au niveau des deux extrémités longitudinales de l'aube, de sorte que l'aube comprend en outre des première et deuxième pattes de fixation ayant des orifices de fixation usinés et présentes respectivement à chacune des extrémités longitudinales de l'aube et s'étendant suivant l'axe longitudinal et en ce que le renfort fibreux présente un tissage tridimensionnel ou multicouches, le renfort fibreux comprenant une partie de préforme de pale se réunissant à chacune de ses extrémités longitudinales avec deux demi-parties de préformes de plates-formes intérieure ou extérieure solidaires de la partie de préforme de pale de manière à former une partie de préforme de patte de fixation intérieure ou extérieure solidaire de la partie de préforme de pale, chaque partie de préforme de patte de fixation intérieure ou extérieure s'étendant suivant l'axe longitudinal. Selon une caractéristique particulière du procédé de l'invention, des fils de chaîne présents dans la partie de patte de fixation intérieure ou extérieure du renfort fibreux sont déviés dans une demi-partie de préforme de plates-formes intérieure ou extérieure.

Selon une autre caractéristique particulière du procédé de l'invention, la partie de préforme de pale du renfort fibreux présente une épaisseur supérieure à l'épaisseur des demi-parties de préforme de plates-formes intérieure ou extérieure.

### Brève description des dessins

[Fig. 1] La figure 1 est une vue schématique en perspective d'une aube de turbomachine conformément à un mode de réalisation de l'invention,
[Fig. 2] La figure 2 est une vue schématique en plan d'une ébauche fibreuse tissée destinée à la réalisation d'une préforme fibreuse pour une aube du type de celle de la figure 1,
[Fig. 3] La figure 3 est une vue latérale de l'ébauche de la figure 2,
[Fig. 4] La figure 4 est une vue schématique à échelle agrandie de plans de tissage de l'ébauche de la figure 2 vue en coupe selon le plan IV-IV de la figure 2,
[Fig. 5] La figure 5 est une vue schématique à échelle agrandie de plans de tissage de l'ébauche de la figure 2 vue en coupe selon le plan V-V de la figure 2,
[Fig. 6] La figure 6 une vue schématique montrant la réalisation d'une préforme d'aube à partir de l'ébauche fibreuse des figures 2 à 5,
[Fig. 7] La figure 7 est une vue partielle en coupe de la préforme d'aube de la figure 6,
[Fig. 8] La figure 8 est une vue schématique en perspective d'une aube de turbomachine conformément à un autre mode de réalisation de l'invention,
[Fig. 9] La figure 9 est une vue schématique en plan d'une ébauche fibreuse tissée destinée à la réalisation d'une préforme fibreuse pour une aube du type de celle de la figure 8,
[Fig. 10] La figure 10 est une vue latérale de l'ébauche de la figure 9,
[Fig. 11] La figure 11 est une vue schématique à échelle agrandie de plans de tissage de l'ébauche de la figure 9 vue en coupe selon le plan XI-XI de la figure 9,
[Fig. 12] La figure 12 est une vue schématique à échelle agrandie de plans de tissage de l'ébauche de la figure 9 vue en coupe selon le plan V-V de la figure 9,
[Fig. 13] La figure 13 une vue schématique montrant la réalisation d'une préforme d'aube à partir de l'ébauche fibreuse des figures 9 à 12,
[Fig. 14] La figure 14 est une vue partielle en coupe de la préforme d'aube de la figure 13.

### Description des modes de réalisation

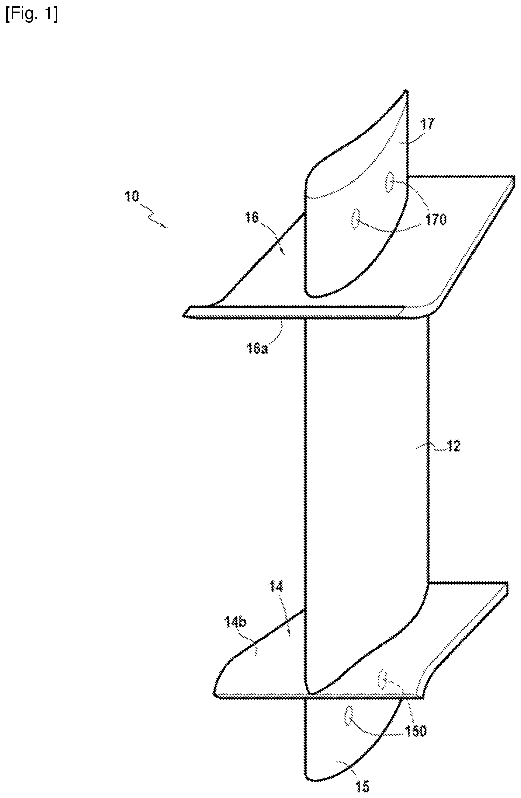

La figure 1 montre très schématiquement une aube 10, par exemple une aube fixe directrice de sortie (OGV pour « *Outlet Guide Vane* ») d'un redresseur de flux secondaire d'une turbomachine aéronautique. L'aube 10 comprend une pale 12, des plates-formes intérieure 14 et extérieure 16 et des pattes de fixation intérieure 15 et extérieure 17 s'étendant dans la direction longitudinale de la pale 12 de l'aube 10.

Dans tout le texte, les termes "intérieur" et "extérieur" sont utilisés en référence à la position radiale par rapport à l'axe de la turbomachine.

La face extérieure 14b de la plate-forme 14 et la face intérieure 16a de la plate-forme 16 sont destinées à délimiter la veine d'écoulement de gaz dans la turbine après montage de l'aube 10 dans un carter de turbine. La patte de fixation intérieure 15 est destinée à permettre la fixation de l'aube 10 à un moyeu de la turbomachine via des orifices de fixation 150 tandis que la patte de fixation extérieure 17 est destinée à permettre la fixation de l'aube 10 à une virole de la turbomachine via des orifices de fixation 170.

La pale 12 s'étend entre les plates-formes 14 et 16 et les pattes de fixation 15 et 17, dont elle est solidaire. Les pattes de fixation 15 et 17 sont des éléments massifs ne comportant pas de cavité s'étendant dans la direction longitudinale de la pale 12.

L'aube 10 est en matériau composite. Sa fabrication comprend la formation d'une préforme fibreuse ayant une forme correspondant à celle de l'aube et la densification de la préforme par une matrice.

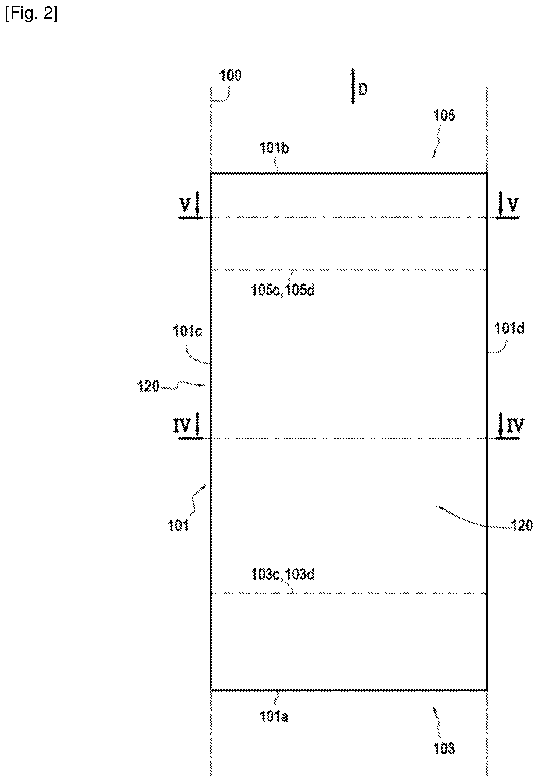

La figure 2 montre en plan une ébauche fibreuse 101 à partir de laquelle une préforme fibreuse de l'aube 10 peut être formée.

L'ébauche 101 est obtenue à partir d'une bande 100 tissée par tissage tridimensionnel (3D) ou multicouches, la bande 100 s'étendant de façon générale dans une direction D correspondant à la direction longitudinale de l'aube à fabriquer. Le tissage est réalisé par exemple avec des fils de chaîne s'étendant dans la direction D, étant noté qu'un tissage avec des fils de trame s'étendant dans cette direction est également possible. Une pluralité d'ébauches 101 peuvent être tissées l'une à la suite de l'autre dans la direction D. On peut aussi tisser simultanément plusieurs rangées parallèles d'ébauches 101.

Dans le mode de réalisation des figures 2 à 5, une ébauche 101 s'étendant suivant un axe longitudinal X comprend, dans son épaisseur et à chacune de ses extrémités 101a et 101b, une première partie 102, 112, une deuxième partie 104, 114 et une troisième partie 106, 116. La partie 102 est située entre la partie 104 et la partie 106. La partie 102 est liée aux parties 104 et 106 par tissage 3D dans une zone 120 destinée à former la pale de l'aube et déliée des parties 104 et 106 au niveau d'une zone de déliaison 103 comprenant une première déliaison 103a entre la partie 102 et la partie 104 et une deuxième déliaison 103b entre la partie 102 et la partie 106. Les déliaisons 103a, 103b s'étendent sur toute la largeur de l'ébauche 101 (dimension en sens trame) à partir de l'extrémité 101a de l'ébauche 101 jusqu'à des fonds de déliaison 103c et 103d. Les fonds de déliaison 103c et 103d s'étendent entre les bords longitudinaux 101c et 101d de l'ébauche 101 suivant la direction trame.

La partie 112 est située entre la partie 114 et la partie 116 et est liée aux parties 114 et 116 par tissage 3D dans la zone 120 destinée à former la pale de l'aube et déliée des parties 114 et 116 au niveau d'une zone de déliaison 105 comprenant une première déliaison 105a entre la partie 112 et la partie 114 et une deuxième déliaison 105b entre la partie 112 et la partie 116. Les déliaisons 105a, 105b s'étendent sur toute la largeur de l'ébauche 101 à partir de l'extrémité 101b de l'ébauche 101 jusqu'à des fonds de déliaison 105c et 105d. Les fonds de déliaison 105c et 105d s'étendent entre les bords longitudinaux 101c et 101d de l'ébauche 101.

De façon bien connue, une déliaison est ménagée entre deux couches de fils de chaîne en omettant de faire passer un fil de trame à travers la zone de déliaison pour lier des fils de couches de chaîne situées de part et d'autre de la déliaison.

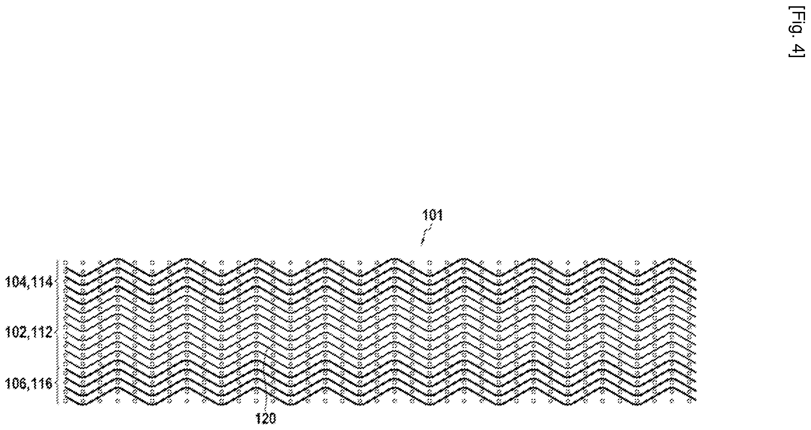

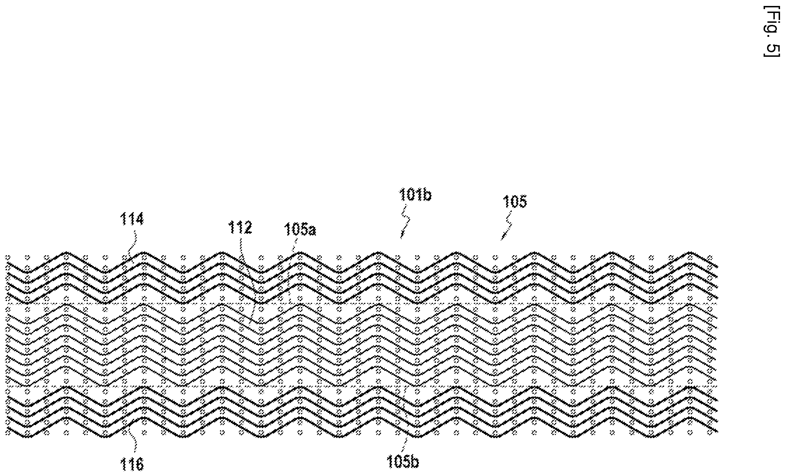

Les plans des figures 4 et 5 montrent un exemple de tissage 3D avec armure interlock et déliaisons 105a et 105b, les déliaisons 103a et 103b étant obtenues de la même façon que les déliaisons 105a et 105b. Sur la figure 5, les déliaisons sont représentées par des tirets. La partie 112 comprend une pluralité de couches de fils de chaîne (8 dans l'exemple illustré) qui sont liées par tissage 3D. Les parties 114 et 116 comprennent chacune une pluralité de couches de fils de chaîne (4 dans l'exemple illustré) qui sont liées entre elles par tissage 3D. Entre la zone de déliaison 103 délimitée par les fonds de déliaison 103c et 103d et la zone de déliaison 105 délimitée par les fonds de déliaison 105c et 105d, les couches de fils de chaîne des parties 102, 112, 104, 114 et 106, 116 sont, dans l'exemple illustré, toutes liées entre elles (figure 4).

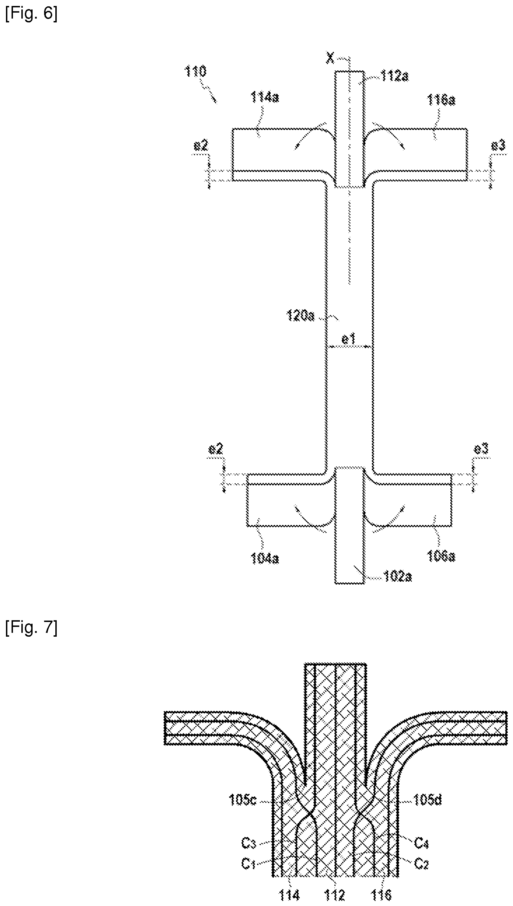

Après tissage, une préforme fibreuse 110 est formée à partir de l'ébauche 101. Plus précisément, le segment 120a situé au centre de la préforme 110 correspond à une partie de préforme de pale. Les segments 104a, 114a et 106a, 116a des parties 104, 106, 114, 116 non liées aux parties 102 et 112 et présents aux extrémités longitudinales du segment 120a sont dépliés ou déployés comme montré sur la figure 6 en vue de former chacun des demi-parties de préforme pour les plates-formes 14, 16, des segments 104a, 114a étant adjacents aux déliaisons 103a, 105a et les segments 106a, 116a étant adjacents aux déliaisons 103b, 105b. Les dépliages sont réalisés au niveau des fonds de déliaison.

Conformément à l'invention, les segments 102a et 112a destinés à former respectivement une partie de préforme de patte de fixation intérieure et une partie de préforme de patte de fixation extérieure sont laissés dans leur position parallèle à la direction longitudinale X de l'ébauche.

On forme ainsi un renfort fibreux pour l'aube 10 à réaliser qui comprend une partie de préforme de pale 120a se divisant à chacune de ses extrémités longitudinales en deux demi-parties de préformes de plates-formes intérieure ou extérieure 104a, 106a et 114a, 116a solidaires de la partie de préforme de pale et une partie de préforme de patte de fixation intérieure ou extérieure 102a, 112a solidaire de la partie de préforme de pale.

La préforme fibreuse 110 de l'aube à fabriquer est ensuite placé dans un outillage de conformation pour obtenir le profil de pale désiré et les formes désirées pour les plateformes et pattes de fixation.

Une aube en matériau composite à matrice céramique (CMC) telle que celle de la figure 1 peut être fabriquée de la façon suivante.

Une bande fibreuse 100 est tissée par tissage tridimensionnel, comprenant une pluralité d'ébauches fibreuses 101 orientées par exemple en sens chaîne, avec zones de déliaison, comme montré sur la figure 2. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'alumine Al₂O₃, en particulier pour des matériaux CMC de type oxyde/oxyde (fibres du renfort fibreux et matrice en oxyde réfractaire). On pourrait aussi utiliser des fils de carbone pour un matériau CMC à renfort fibreux en carbone.

De façon connue, la bande fibreuse peut être traitée pour éliminer l'ensimage présent sur les fibres et la présence d'oxyde à la surface des fibres.

Egalement de façon connue, une mince couche de revêtement d'interphase de défragilisation peut être ensuite formée sur les fibres de la bande fibreuse par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. Après séchage, les ébauches fibreuses individuelles sont découpées. Chaque ébauche est mise en forme (comme illustré par la figure 6) et placée dans un outillage pour conformation des parties de préforme de pale, de plates-formes intérieure et extérieure et de pattes de fixation intérieure et extérieure.

Ensuite, la résine est réticulée puis pyrolysée après avoir retiré la préforme de l'outillage de conformation pour obtenir une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation peut être formée par CVI, par exemple en PyC, BN ou BC. La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice autocicatrisante comprenant des phases de matrice en carbone pyrolytique PyC, en carbure de bore B4C ou en système ternaire Si-B-C comme décrit notamment dans les documents US 5 246 756 et US 5 965 266. D'autres types de matrice céramique peuvent être envisagés, notamment des matrices en oxyde réfractaire, par exemple en alumine, en particulier pour des matériaux CMC de type oxyde/oxyde.

L'aube peut être également fabriquée en matériau composite à matrice organique CMO (thermoplastique ou thermodurcissable avec préforme fibreuse de tout type). Dans ce cas, la densification de la préforme fibreuse obtenue de façon connue en soi suivant le procédé par voie liquide.

Le procédé par voie liquide consiste à imprégner la préforme fibreuse par une résine. La préforme est placée dans un moule pouvant être fermé de manière étanche avec un logement ayant la forme de la pièce finale moulée. Ensuite, on injecte la résine, par exemple une résine thermoplastique ou thermodurcissable, dans tout le logement pour imprégner toute la partie fibreuse de la préforme.

La polymérisation est réalisée par un traitement thermique (généralement par chauffage du moule). La préforme étant toujours maintenue dans le moule, elle a une forme correspondant à celle de la pièce à réaliser. La matrice organique peut être notamment obtenue à partir de résines époxydes.

Une fois la préforme densifiée par la matrice, on obtient une aube dont la géométrie correspond à l'aube finale 10 de la figure 1. On usine alors la patte de fixation intérieure pour former les orifices de fixation 150 et la patte de fixation extérieure pour former les orifices de fixation 170.

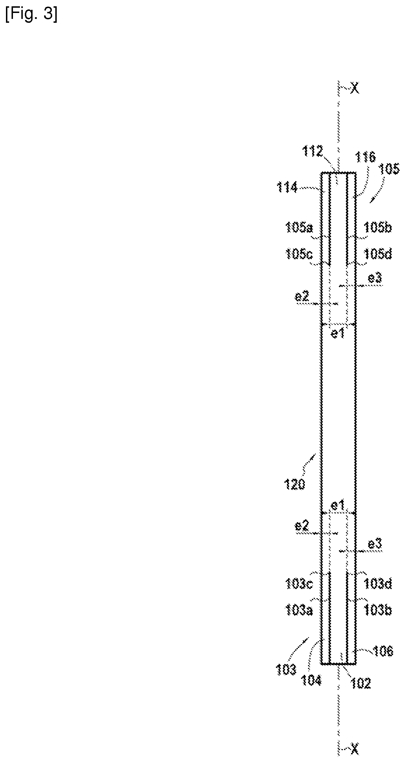

Selon un aspect de l'invention, les premières parties 102, 112 présentent une épaisseur e₁ supérieur à l'épaisseur e₂ des deuxièmes parties 104, 114 et à l'épaisseur e₃ des troisièmes parties 106, 116 (figure 3). Dans l'exemple illustré sur les figures 4 et 5, les deuxième et troisième parties 114 et 116 comprennent chacune 4 couches de fils des chaîne tandis que la première partie 112 comprend 8 couches de fils de chaîne. Il en est de même pour les première, deuxième et troisième parties 102, 104 et 106 non représentées sur les figures 4 et 5.

Le cheminement des fils de chaîne dans la préforme fibreuse peut-être droit, c'est-à-dire que les fils de chaîne ne croisent pas et que les mêmes fils de chaîne restent présents dans les première, deuxième et troisième parties 102, 104 et 106 en dehors et dans les zones de déliaison. Selon une variante de réalisation illustrée à la figure 7, certains fils de chaîne présents dans la première partie 112 en dehors de la zone de déliaison 105, ici des fils de chaîne C₁ et C₂, sont déviés dans les deuxième et troisième parties 114 et 116 au niveau de la zone de déliaison 105. Des fils de chaîne présents dans les deuxième et troisième parties 114 et 116 en dehors de la zone de déliaison 105, ici des fils de chaîne C₃ et C₄ peuvent également être déviés dans la première partie 112 au niveau de la zone de déliaison 105. On augmente ainsi la résistance mécanique de la préforme fibreuse au niveau du fond des déliaisons 105c et 105d. Il peut en être de même pour des fils de chaîne des première, deuxième et troisième parties 102, 104 et 106 non représentées sur la figure 7.

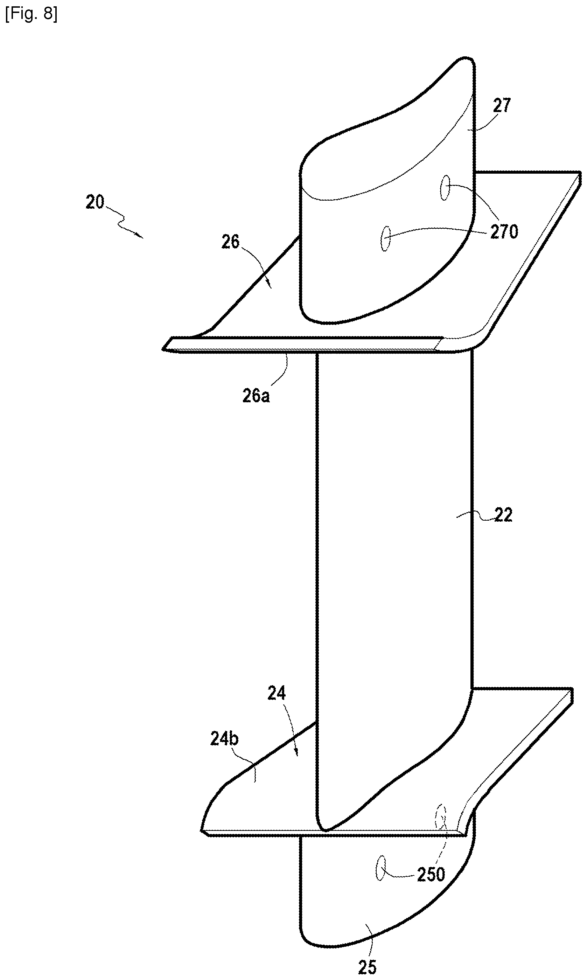

La figure 8 montre très schématiquement une aube 20 selon un autre mode de réalisation de l'invention. L'aube 20, par exemple une aube fixe directrice de sortie (OGV pour « *Outlet Guide Vane* ») d'un redresseur de flux secondaire d'une turbomachine aéronautique, une pale 22, des plates-formes intérieure 24 et extérieure 26 et des pattes de fixation intérieure 25 et extérieure 27 s'étendant dans la direction longitudinale de la pale 22 de l'aube 20. La face extérieure 24b de la plate-forme 24 et la face intérieure 26a de la plate-forme 26 sont destinées à délimiter la veine d'écoulement de gaz dans la turbine après montage de l'aube 20 dans un carter de turbine. La patte de fixation intérieure 25 est destinée à permettre la fixation de l'aube 20 à un moyeu de la turbomachine via des orifices de fixation 250 tandis que la patte de fixation extérieure 27 est destinée à permettre la fixation de l'aube 20 à une virole de la turbomachine via des orifices de fixation 270. La pale 22 s'étend entre les plates-formes 24 et 26 et les pattes de fixation 25 et 27, dont elle est solidaire. Les pattes de fixation 25 et 27 sont des éléments massifs ne comportant pas de cavité s'étendant dans la direction longitudinale de la pale 12.

L'aube 20 est en matériau composite. Sa fabrication comprend la formation d'une préforme fibreuse ayant une forme correspondant à celle de l'aube et la densification de la préforme par une matrice.

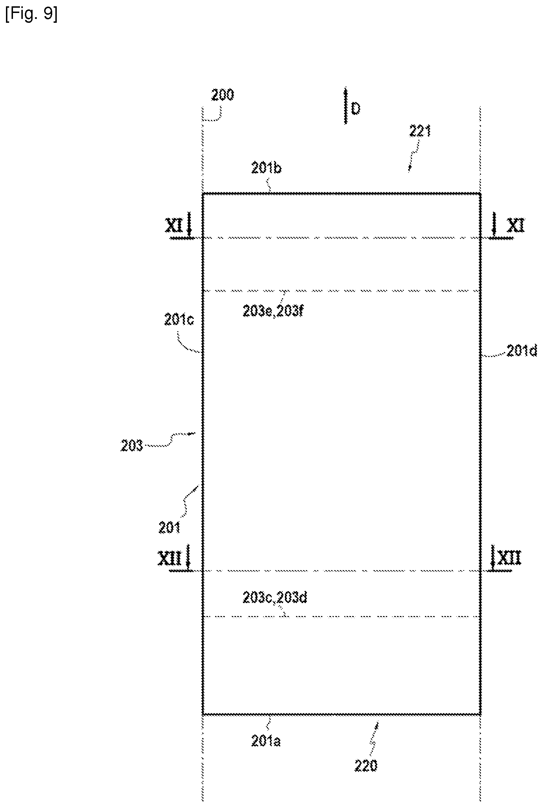

La figure 9 montre en plan une ébauche fibreuse 201 à partir de laquelle une préforme fibreuse de l'aube 20 peut être formée.

L'ébauche 201 est obtenue à partir d'une bande 200 tissée par tissage tridimensionnel (3D) ou multicouches, la bande 200 s'étendant de façon générale dans une direction D correspondant à la direction longitudinale de l'aube à fabriquer. Le tissage est réalisé par exemple avec des fils de chaîne s'étendant dans la direction D, étant noté qu'un tissage avec des fils de trame s'étendant dans cette direction est également possible. Une pluralité d'ébauches 201 peuvent être tissées l'une à la suite de l'autre dans la direction D. On peut aussi tisser simultanément plusieurs rangées parallèles d'ébauches 201.

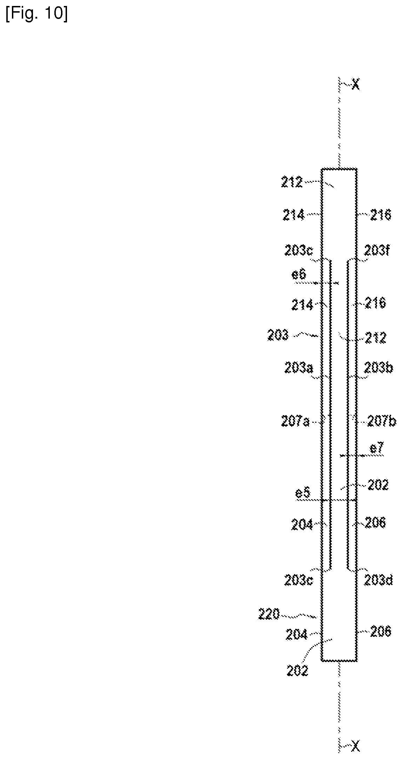

Dans le mode de réalisation des figures 10 à 12, une ébauche 201 s'étendant suivant un axe longitudinal X comprend, dans son épaisseur et à chacune de ses extrémités 201a et 201b, une première partie 202, 212, une deuxième partie 204, 214 et une troisième partie 206, 216. La partie 202 est située entre la partie 204 et la partie 206. La partie 202 est liée aux parties 204 et 206 par tissage 3D dans une zone ou portion de liaison 220 destinées à former la patte de fixation intérieure de l'aube et déliée des parties 204 et 206 au niveau d'une zone de déliaison 203 comprenant une première déliaison 203a entre la partie 102 et la partie 104 et une deuxième déliaison 203b entre la partie 202 et la partie 206. Les déliaisons 203a et 203b s'étendent sur toute la largeur de l'ébauche 201 (dimension en sens trame) entre les fonds de déliaison 203c et 203d et des fonds de déliaison 203e et 203f. Les fonds de déliaison 203c, 203d, 203e et 203f s'étendent entre les bords longitudinaux 201c et 201d de l'ébauche 201 suivant la direction trame.

La partie 212 est située entre la partie 214 et la partie 216 et est liée aux parties 214 et 216 par tissage 3D dans une zone ou portion de liaison 221 destinée à former la patte de fixation extérieure de l'aube et déliée des parties 214 et 216 au niveau de la zone de déliaison 203 comprenant la première déliaison 203a entre la partie 212 et la partie 214 et la deuxième déliaison 203b entre la partie 212 et la partie 216.

De façon bien connue, une déliaison est ménagée entre deux couches de fils de chaîne en omettant de faire passer un fil de trame à travers la zone de déliaison pour lier des fils de couches de chaîne situées de part et d'autre de la déliaison.

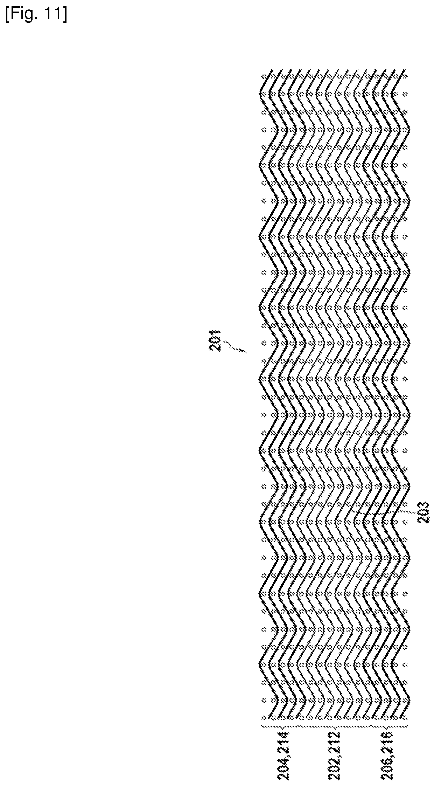

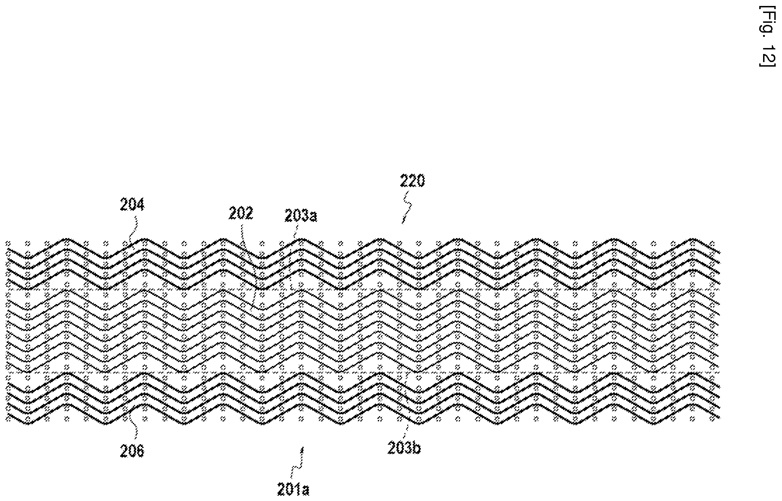

Les plans des figures 11 et 12 montrent un exemple de tissage 3D avec armure interlock et déliaisons 203a et 203b. Sur la figure 12, les déliaisons sont représentées par des tirets. La partie 202 comprend une pluralité de couches de fils de chaîne (8 dans l'exemple illustré) qui sont liées par tissage 3D. Les parties 204 et 206 comprennent chacune une pluralité de couches de fils de chaîne (4 dans l'exemple illustré) qui sont liées entre elles par tissage 3D. Dans la portion de liaison 220, les couches de fils de chaîne des parties 203, 204 et 206 sont, dans l'exemple illustré, toutes liées entre elles (figure 11). Il en est de même pour les parties 212, 214 et 216 dans la portion de liaison 221.

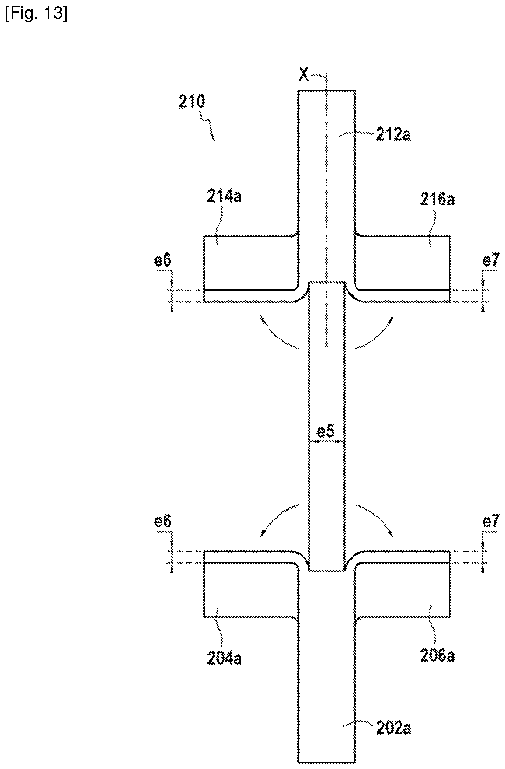

Après tissage, une préforme fibreuse 210 est formée à partir de l'ébauche 201. Plus précisément, on sépare tout d'abord les parties 204 et 214, d'une part, et les parties 206 et 216, d'autre part, présentes dans la zone de déliaison 203 en réalisant respectivement des découpes 207a et 207b (figure 10). Une fois les parties 204, 214, 206 et 216 libérées, les segments 204a, 214a et 206a, 216a des parties 204, 206, 214, 216 non liées aux parties 202 et 212 sont dépliés ou déployés comme montré sur la figure 13 en vue de former chacun des demi-parties de préforme pour les plates-formes 24, 26. Les dépliages sont réalisés au niveau des fonds de déliaison. Le segment situé au centre de la préforme 210 correspond à une partie de préforme de pale.

Conformément à l'invention, des segments 202a et 212a destinés à former respectivement une partie de préforme de patte de fixation intérieure et une partie de préforme de patte de fixation extérieure sont laissés dans leur position parallèle à la direction longitudinale X de l'ébauche.

On forme ainsi un renfort fibreux pour l'aube 20 à réaliser qui comprend une partie de préforme de pale se réunissant à chacune de ses extrémités longitudinales avec deux demi-parties de préformes de plates-formes intérieure ou extérieure 204a, 206a ; 214a, 216a solidaires de la partie de préforme de pale de manière à former une partie de préforme de patte de fixation intérieure ou extérieure 202a ; 212a solidaire de la partie de préforme de pale.

La préforme fibreuse 210 de l'aube à fabriquer est ensuite placé dans un outillage de conformation pour obtenir le profil de pale désiré et les formes désirées pour les plates-formes et pattes de fixation.

Une aube en matériau composite à matrice céramique (CMC) telle que celle de la figure 8 peut être fabriquée de la façon déjà décrite précédemment pour l'aube de la figure 1 et n'est donc pas répétée ici une nouvelle fois par souci de simplification.

Une fois la préforme densifiée par la matrice, on obtient une aube dont la géométrie correspond à l'aube finale 20 de la figure 8. On usine alors la patte de fixation intérieure pour former les orifices de fixation 250 et la patte de fixation extérieure pour former les orifices de fixation 270.

Selon un aspect de l'invention, les premières parties 202, 212 présentent une épaisseur e5 supérieur à l'épaisseur e6 des deuxièmes parties 204, 214 et à l'épaisseur e7 des troisièmes parties 206, 216. Dans l'exemple illustré sur les figures 11 et 12, les deuxième et troisième parties 214 et 216 comprennent chacune 4 couches de fils des chaînes tandis que la première partie 212 comprend 8 couches de fils de chaîne. Il en est de même pour les première, deuxième et troisième parties 202, 204 et 206 non représentées sur les figures 11 et 12.

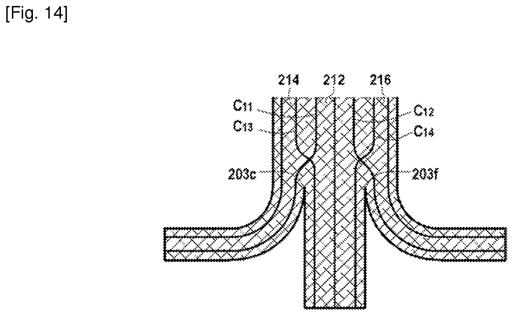

De même que pour la préforme fibreuse de l'aube 10 décrite précédemment, le cheminement des fils de chaîne dans la préforme fibreuse peut-être droit, c'est-à-dire que les fils de chaîne ne croisent pas et que les mêmes fils de chaîne restent présents dans les première, deuxième et troisième parties 202, 204 et 206 en dehors et dans les zones de déliaison. Selon une variante de réalisation illustrée à la figure 14, certains fils de chaîne présents dans la première partie 202 en dehors de la zone de déliaison 203, ici des fils de chaîne C₁₁ et C₁₂, sont déviés dans les deuxième et troisième parties 204 et 206 au niveau de la zone de déliaison 203. Des fils de chaîne présents dans les deuxième et troisième parties 204 et 206 en dehors de la zone de déliaison 203, ici des fils de chaîne C₁₃ et C₁₄ peuvent également être déviés dans la première partie 202 au niveau de la portion de déliaison 220. On augmente ainsi la résistance mécanique de la préforme fibreuse au niveau du fond des déliaisons 203c et 203d. Il peut en être de même pour des fils de chaîne des première, deuxième et troisième parties 212, 214 et 216 non représentées sur la figure 14.

## Revendications

1. Procédé de fabrication d'une aube fixe de turbomachine (10) en matériau composite, le procédé comportant :
- la formation par tissage tridimensionnel ou multicouches entre une pluralité de couches de fils de chaîne et une pluralité de couches de fils de trame d'une ébauche fibreuse (101) ayant un axe longitudinal (X) correspondant à celui de la pale (12) de l'aube (10) à réaliser, l'ébauche fibreuse s'étendant entre des première et deuxième extrémités longitudinales (101a, 101b), l'ébauche fibreuse étant séparée dans son épaisseur en des première, deuxième et troisième parties (102, 104, 106 ; 112, 114, 116) dans deux zones de déliaison (103, 105) respectivement présentes aux extrémités longitudinales de l'ébauche fibreuse, la première partie (102 ; 112) étant située entre la deuxième partie et la troisième partie (104, 106 ; 114, 116) auxquelles elle est reliée par tissage en dehors desdites zones de déliaison (103, 105),
- la formation, à partir de l'ébauche fibreuse (101), d'une préforme (110) de l'aube à réaliser, par dépliage, au niveau de chaque extrémité longitudinale et de part et d'autre de la première partie (102, 112), des segments (104a, 114a) de la deuxième partie et des segments (106a, 116a) de la troisième partie non liés à la première partie, et par la mise en forme des segments (104a, 114a) dépliés de la deuxième partie et des segments (106a, 116a) dépliés de la troisième partie pour former des parties de préforme pour une plate-forme (14 ; 16) de l'aube à fabriquer (10) au niveau de chaque extrémité longitudinale de l'ébauche fibreuse, les segments (102a, 112a) de la première partie non liés aux segments des deuxième et troisième parties (104a, 114a, 106a, 116a) s'étendant suivant l'axe longitudinal (X) pour former une partie de préforme pour une patte de fixation (15 ; 17) de la pièce à fabriquer (10) au niveau de chaque extrémité longitudinale de l'ébauche fibreuse,
- la densification de la préforme par une matrice pour obtenir une aube fixe de turbomachine (10) en matériau composite ayant une plate-forme intégrée (14 ; 16) et une patte de fixation (15 ; 17) à chaque extrémité longitudinale alignée avec l'axe longitudinal de l'aube,
- un usinage des pattes de fixation à chaque extrémité longitudinale pour former des orifices de fixation.

2. Procédé selon la revendication 1, dans lequel des fils de chaîne (C₁, C₂) présents dans la première partie (112) en dehors des zones de déliaison (103, 105) sont déviés dans la deuxième ou troisième partie (114 ; 112) dans au moins une zone de déliaison.

3. Procédé selon la revendication 1 ou 2, dans lequel la première partie (102 ; 112) présente une épaisseur (e₁) supérieure à l'épaisseur (e₂ ; e₃) des deuxième et troisième parties.

4. Procédé de fabrication d'une aube fixe de turbomachine (20) en matériau composite, le procédé comportant :
- la formation par tissage tridimensionnel ou multicouches entre une pluralité de couches de fils de chaîne et une pluralité de couches de fils de trame d'une ébauche fibreuse (201) ayant un axe longitudinal (X) correspondant à celui de la pale (22) de l'aube (20) à réaliser, l'ébauche fibreuse s'étendant entre des première et deuxième extrémités longitudinales (201a, 201b), l'ébauche fibreuse étant séparée dans son épaisseur en des première, deuxième et troisième parties (202, 204, 206 ; 212, 214, 216) dans une zone de déliaison (203) s'étendant entre ses extrémités longitudinales, la première partie (202 ; 212) étant située entre la deuxième partie et la troisième partie (204, 206 ; 214, 216) auxquelles elle est reliée par tissage au niveau des extrémités longitudinales de l'ébauche fibreuse de manière à former deux portions de liaison (220, 221),
- la découpe des deuxième et troisième parties (204, 206, 214, 216) pour diviser lesdites deuxième et troisième parties en deux segments chacune (204a, 214a ; 206a, 216a),
- la formation, à partir de l'ébauche fibreuse (201), d'une préforme (210) de l'aube à réaliser, par dépliage, de part et d'autre de la première partie (202 ; 212), des segments (204a, 214a) de la deuxième partie et des segments (206a ; 216a) de la troisième partie non liés à la première partie, et par la mise en forme des segments (204a, 214a) dépliés de la deuxième partie et des segments (206a, 216a) dépliés de la troisième partie pour former des parties de préforme pour une plate-forme (24 ; 26) de l'aube à fabriquer (20) au voisinage de chaque extrémité longitudinale de l'ébauche fibreuse, les deux portions de liaisons (220, 221) entre les première, deuxième et troisième parties s'étendant suivant l'axe longitudinal (X) pour former une partie de préforme pour une patte de fixation (25 ; 27) de l'aube à fabriquer (20) au niveau de chaque extrémité longitudinale de l'ébauche fibreuse,
- la densification de la préforme par une matrice pour obtenir une aube (20) en matériau composite ayant une plate-forme intégrée (24 ; 26) et une patte de fixation à chaque extrémité longitudinale alignée avec l'axe longitudinal de l'aube,
- un usinage des pattes de fixation à chaque extrémité longitudinale pour former des orifices de fixation.

5. Procédé selon la revendication 4, dans lequel des fils de chaîne (C₁₁, C₁₂) présents dans la première partie (212) dans au moins une portion de liaison sont déviés dans la deuxième ou troisième partie (214 ; 216) dans la zone de déliaison.

6. Procédé selon la revendication 4 ou 5, dans lequel la première partie (202 ; 212) présente une épaisseur supérieure (e₅) à l'épaisseur (e₆ ; e₇) des deuxième et troisième parties.

7. Aube fixe de turbomachine (10) en matériau composite comprenant un renfort fibreux densifié par une matrice, l'aube ayant une pale (12) s'étendant suivant un axe longitudinal (X) et deux plates-formes (14 ; 16) solidaires de la pale et présentes respectivement au niveau des deux extrémités longitudinales de l'aube, de sorte que l'aube comprend en outre des première et deuxième pattes de fixation (15, 17) ayant des orifices de fixation usinés et présentes respectivement à chacune des extrémités longitudinales de l'aube et s'étendant suivant l'axe longitudinal (X) et en ce que le renfort fibreux présente un tissage tridimensionnel ou multicouches, le renfort fibreux comprenant une partie de préforme de pale (120a) se divisant à chacune de ses extrémités longitudinales en deux demi-parties de préformes de plates-formes intérieure ou extérieure (104a, 106a ; 114a, 116a) solidaires de la partie de préforme de pale et une partie de préforme de patte de fixation intérieure ou extérieure (102a ; 112a) solidaire de la partie de préforme de pale, chaque partie de préforme de patte de fixation intérieure ou extérieure s'étendant suivant l'axe longitudinal entre les demi-parties de préformes de plates-formes intérieure ou extérieure.

8. Aube selon la revendication 7, dans laquelle des fils de chaîne (C₁, C₂) présents dans la partie de préforme de pale du renfort fibreux sont déviés dans une demi-partie de préforme de plates-formes intérieure ou extérieure.

9. Aube selon la revendication 7 ou 8, dans laquelle la partie de préforme de pale (120a) du renfort fibreux présente une épaisseur (e₁) supérieure à l'épaisseur (e₂ ; e₃) des demi-parties de préforme de plates-formes intérieure ou extérieure (104a, 106a ; 114a, 116a).

10. Aube fixe de turbomachine (20) en matériau composite comprenant un renfort fibreux densifié par une matrice, l'aube ayant une pale (22) s'étendant dans un axe longitudinal et deux plates-formes (24 ; 26) solidaires de la pale et présentes respectivement au niveau des deux extrémités longitudinales de l'aube, de sorte que l'aube comprend en outre des première et deuxième pattes de fixation (25, 27) ayant des orifices de fixation usinés et présentes respectivement à chacune des extrémités longitudinales de l'aube et s'étendant suivant l'axe longitudinal (X) et en ce que le renfort fibreux présente un tissage tridimensionnel ou multicouches, le renfort fibreux comprenant une partie de préforme de pale se réunissant à chacune de ses extrémités longitudinales avec deux demi-parties de préformes de plates-formes intérieure ou extérieure (204a, 206a ; 214a, 216a) solidaires de la partie de préforme de pale de manière à former une partie de préforme de patte de fixation intérieure ou extérieure (202a ; 212a) solidaire de la partie de préforme de pale, chaque partie de préforme de patte de fixation intérieure ou extérieure s'étendant suivant l'axe longitudinal.

11. Aube selon la revendication 10, dans laquelle des fils de chaîne (C₁₁, C₁₂) présents dans la partie de patte de fixation intérieure ou extérieure du renfort fibreux sont déviés dans une demi-partie de préforme de plates-formes intérieure ou extérieure.

12. Aube selon la revendication 10 ou 11, dans laquelle la partie de préforme de pale du renfort fibreux présente une épaisseur (e₅) supérieure à l'épaisseur (e₆ ; e₇) des demi-parties de préforme de plates-formes intérieure ou extérieure (204a, 206a ; 214a, 216a).

## Patentansprüche

1. Verfahren zur Herstellung einer feststehenden Schaufel einer Turbomaschine (10) aus Verbundmaterial, wobei das Verfahren beinhaltet:
- die Bildung eines Faserrohlings (101), der eine Längsachse (X) aufweist, die jener des Blatts (12) der zu verwirklichenden Schaufel (10) entspricht, durch dreidimensionale oder mehrschichtige Verwebung zwischen einer Vielzahl von Schichten von Kettfäden und einer Vielzahl von Schichten von Schussfäden, wobei der Faserrohling sich zwischen einem ersten und einem zweiten Längsende (101a, 101b) erstreckt, wobei der Faserrohling in zwei bindungslosen Zonen (103, 105), die jeweils an den Längsenden des Faserrohlings vorliegen, in seiner Dicke in einen ersten, zweiten und dritten Teil (102, 104, 106; 112, 114, 116) unterteilt ist, wobei der erste Teil (102; 112) sich zwischen dem zweiten Teil und dem dritten Teil (104, 106; 114, 116) befindet, mit welchen er durch Verwebung außerhalb der bindungslosen Zonen (103, 105) verbunden ist,
- die Bildung einer Vorform (110) für die zu verwirklichende Schaufel ausgehend von dem Faserrohling (101), durch Auseinanderfalten, an jedem Längsende und auf beiden Seiten des ersten Teils (102, 112), von Segmenten (104a, 114a) des zweiten Teils und von Segmenten (106a, 116a) des dritten Teils, die nicht mit dem ersten Teil verbunden sind, und durch Informbringen der auseinandergefalteten Segmente (104a, 114a) des zweiten Teils und der auseinandergefalteten Segmente (106a, 116a) des dritten Teils, um Vorformteile für eine Plattform (14; 16) der zu fertigenden Schaufel (10) an jedem Längsende des Faserrohlings zu bilden, wobei die Segmente (102a, 112a) des ersten Teils, die nicht mit den Segmenten des zweiten und dritten Teils (104a, 114a, 106a, 116a) verbunden sind, sich der Längsachse (X) folgend erstrecken, um einen Vorformteil für eine Befestigungslasche (15; 17) des zu fertigenden Teils (10) an jedem Längsende des Faserrohlings zu bilden,
- die Verdichtung der Vorform durch eine Matrix, um eine feststehende Schaufel einer Turbomaschine (10) aus Verbundmaterial zu erhalten, die eine integrierte Plattform (14; 16) und eine Befestigungslasche (15; 17) an jedem Längsende aufweist, die mit der Längsachse der Schaufel ausgerichtet ist,
- eine maschinelle Bearbeitung der Befestigungslaschen an jedem Längsende, um Befestigungsöffnungen zu bilden.

2. Verfahren nach Anspruch 1, wobei Kettfäden (C₁, C₂), die in dem ersten Teil (112) außerhalb der bindungslosen Zonen (103, 105) vorliegen, in dem zweiten oder dritten Teil (114; 112) in zumindest einer bindungslosen Zone umgelenkt sind.

3. Verfahren nach Anspruch 1 oder 2, wobei der erste Teil (102; 112) eine Dicke (e₁) aufweist, die größer als die Dicke (e₂; e₃) des zweiten und dritten Teils ist.

4. Verfahren zur Herstellung einer feststehenden Schaufel einer Turbomaschine (20) aus Verbundmaterial, wobei das Verfahren beinhaltet:
- die Bildung eines Faserrohlings (201), der eine Längsachse (X) aufweist, die jener des Blatts (22) der zu verwirklichenden Schaufel (20) entspricht, durch dreidimensionale oder mehrschichtige Verwebung zwischen einer Vielzahl von Schichten von Kettfäden und einer Vielzahl von Schichten von Schussfäden, wobei der Faserrohling sich zwischen einem ersten und einem zweiten Längsende (201a, 201b) erstreckt, wobei der Faserrohling in einer bindungslosen Zone (203), die sich zwischen seinen Längsenden erstreckt, in seiner Dicke in einen ersten, zweiten und dritten Teil (202, 204, 206; 212, 214, 216) unterteilt ist, wobei der erste Teil (202; 212) sich zwischen dem zweiten Teil und dem dritten Teil (204, 206; 214, 216) befindet, mit welchen er durch Verwebung an den Längsenden des Faserrohlings auf eine Weise verwebt ist, um zwei Bindungsabschnitte (220, 221) zu bilden,
- das Schneiden des zweiten und dritten Teils (204, 206, 214, 216), um den zweiten und dritten Teil jeweils in zwei Segmente (204a, 214a; 206a, 216a) zu teilen,
- die Bildung einer Vorform (210) für die zu verwirklichende Schaufel ausgehend von dem Faserrohling (201), durch Auseinanderfalten von Segmenten (204a, 214a) des zweiten Teils und von Segmenten (206a, 216a) des dritten Teils, die nicht mit dem ersten Teil verbunden sind, auf beiden Seiten des ersten Teils (202, 212), und durch Informbringen der auseinandergefalteten Segmente (204a, 214a) des zweiten Teils und der auseinandergefalteten Segmente (206a, 216a) des dritten Teils, um Vorformteile für eine Plattform (24; 26) der zu fertigenden Schaufel (20) benachbart zu jedem Längsende des Faserrohlings zu bilden, wobei die zwei Bindungsabschnitte (220, 221) zwischen dem ersten, zweiten und dritten Teil sich der Längsachse (X) folgend erstrecken, um einen Vorformteil für eine Befestigungslasche (25; 27) der zu fertigenden Schaufel (20) an jedem Längsende des Faserrohlings zu bilden,
- die Verdichtung der Vorform durch eine Matrix, um eine Schaufel (20) aus Verbundmaterial zu erhalten, die eine integrierte Plattform (24; 26) und eine Befestigungslasche an jedem Längsende aufweist, die mit der Längsachse der Schaufel ausgerichtet ist,
- eine maschinelle Bearbeitung der Befestigungslaschen an jedem Längsende, um Befestigungsöffnungen zu bilden.

5. Verfahren nach Anspruch 4, wobei Kettfäden (C₁₁, C₁₂), die in dem ersten Teil (212) in zumindest einem Bindungsabschnitt vorliegen, in dem zweiten oder dritten Teil (214; 216) in der bindungslosen Zone umgelenkt sind.

6. Verfahren nach Anspruch 4 oder 5, wobei der erste Teil (202; 212) eine Dicke (e₅) aufweist, die größer als die Dicke (e₆; e₇) des zweiten und dritten Teils ist.

7. Feststehende Schaufel einer Turbomaschine (10) aus Verbundmaterial, umfassend eine Faserverstärkung, die durch eine Matrix verdichtet ist, wobei die Schaufel ein Blatt (12), das sich einer Längsachse (X) folgend erstreckt, und zwei Plattformen (14; 16) aufweist, die mit dem Blatt fest verbunden sind und jeweils an den zwei Längsenden der Schaufel vorliegen, auf eine Weise, dass die Schaufel ferner erste und zweite Befestigungslaschen (15, 17) aufweist, welche maschinell eingearbeitete Befestigungsöffnungen aufweisen und jeweils an jedem der Längsenden der Schaufel vorliegen und sich der Längsachse (X) folgend erstrecken, wobei die Faserverstärkung eine dreidimensionale oder mehrschichtige Verwebung aufweist, wobei die Faserverstärkung einen Vorformteil für das Schaufelblatt (120a), der sich an jedem seiner Längsenden in zwei Vorform-Halbteile für eine innere oder äußere Plattform (104a, 106a; 114a, 116a) unterteilt, die mit dem Vorformteil für das Schaufelblatt fest verbunden sind, und einen Vorformteil für eine innere oder äußere Befestigungslasche (102a; 112a) umfasst, der mit dem Vorformteil für das Schaufelblatt fest verbunden ist, wobei jeder Vorformteil für die innere oder äußere Befestigungslasche sich der Längsachse folgend zwischen den Vorform-Halbteilen für die inneren oder äußeren Plattformen erstreckt.

8. Schaufel nach Anspruch 7, wobei Kettfäden (C₁, C₂), die in dem Vorformteil für das Schaufelblatt der Faserverstärkung vorliegen, in einem Vorform-Halbteil für die innere oder äußere Plattform umgelenkt sind.

9. Schaufel nach Anspruch 7 oder 8, wobei der Vorformteil für das Schaufelblatt (120a) der Faserverstärkung eine Dicke (e₁) aufweist, die größer als die Dicke (e₂; e₃) der Vorform-Halbteile für die innere oder äußere Plattform (104a, 106a; 114a, 116a) ist.

10. Feststehende Schaufel einer Turbomaschine (20) aus Verbundmaterial, umfassend eine Faserverstärkung, die durch eine Matrix verdichtet ist, wobei die Schaufel ein Blatt (22), das sich in einer Längsachse (X) erstreckt, und zwei Plattformen (24; 26) aufweist, die mit dem Blatt fest verbunden sind und jeweils an den zwei Längsenden der Schaufel vorliegen, auf eine Weise, dass die Schaufel ferner erste und zweite Befestigungslaschen (25, 27) aufweist, welche maschinell eingearbeitete Befestigungsöffnungen aufweisen und jeweils an jedem der Längsenden der Schaufel vorliegen und sich der Längsachse (X) folgend erstrecken, (und dass) die Faserverstärkung eine dreidimensionale oder mehrschichtige Verwebung aufweist, wobei die Faserverstärkung einen Vorformteil für das Schaufelblatt umfasst, der sich an jedem seiner Längsenden mit zwei Vorform-Halbteilen für eine innere oder äußere Plattform (204a, 206a; 214a, 216a) vereinigt, die mit dem Vorformteil für das Schaufelblatt fest verbunden ist, auf eine Weise, um einen Vorformteil für eine innere oder äußere Befestigungslasche (202a; 212a) zu bilden, der mit dem Vorformteil für das Schaufelblatt fest verbunden ist, wobei jeder Vorformteil für die innere oder äußere Befestigungslasche sich der Längsachse folgend erstreckt.

11. Schaufel nach Anspruch 10, wobei Kettfäden (C₁₁, C₁₂), die in dem Vorformteil für die innere oder äußere Befestigungslasche der Faserverstärkung vorliegen, in einem Vorform-Halbteil für die innere oder äußere Plattform umgelenkt sind.

12. Schaufel nach Anspruch 10 oder 11, wobei der Vorformteil für das Schaufelblatt der Faserverstärkung eine Dicke (e₅) aufweist, die größer als die Dicke (e₆; e₇) der Vorform-Halbteile für die innere oder äußere Plattform (204a, 206a; 214a, 216a) ist.

## Claims

1. A method for manufacturing a fixed turbomachine vane (10) made of composite material, the method including:
- forming, by three-dimensional or multilayer weaving between a plurality of warp yarn layers and a plurality of weft yarn layers, a fiber blank (101) having a longitudinal axis (X) corresponding to that of the blade (12) of the vane (10) to be produced, the fiber blank extending between first and second longitudinal ends (101a, 101b), the fiber blank being separated across its thickness into first, second and third parts (102, 104, 106 ; 112, 114, 116) in two non-interlinked areas (103, 105) respectively present at the longitudinal ends of the fiber blank, the first part (102 ; 112) being located between the second part and the third part (104, 106 ; 114, 116) to which it is connected by weaving outside said non-interlinked areas (103, 105),
- forming, from the fiber blank, (101), a preform (110) of the vane to be produced, by unfolding, at each longitudinal end and on either side of the first part (102, 112), the segments (104a, 114a) of the second part and the segments (106a, 116a) of the third part not interlinked with the first part, and by shaping the unfolded segments (104a, 114a) of the second part and the unfolded segments (106a, 116a) of the third part to form preform parts for a platform (14 ; 16) of the vane to be manufactured (10) at each longitudinal end of the fiber blank, the segments (102a, 112a) of the first part not interlinked with the segments of the second and third parts (104a, 114a, 106a, 116a), extending along the longitudinal axis (X) to form a preform part for a tab (15 ; 17) for attaching the part (10) to be manufactured at each longitudinal end of the fiber blank,
- densifying the preform by a matrix to obtain a fixed turbomachine vane (10) made of composite material having an incorporated platform (14 ; 16) and an attaching tab (15 ; 17) at each longitudinal end aligned with the longitudinal axis of the vane,
- machining attaching tabs at each longitudinal end to form attaching holes.

2. The method as claimed in claim 1, wherein warp yarns (C₁, C₂ present in the first part (112) outside the non-interlinked areas (103, 105) are diverted in the second or third part (114 ; 112) into at least one non-interlinked area.

3. The method as claimed in claim 1 or 2, wherein the first part (102 ; 112) has a thickness (e₁) greater than the thickness (e₂ ; e₃) of the second and third parts.

4. A method for manufacturing a fixed turbomachine vane (20) made of composite material, the method including:
- forming, by three-dimensional or multilayer weaving between a plurality of warp yarn layers and a plurality of weft yarn layers, a fiber blank (201) having a longitudinal axis (X) corresponding to that of the blade (22) of the vane (20) to be produced, the fiber blank extending between first and second longitudinal ends (201a, 201b), the fiber blank being separated across its thickness into first, second and third parts (202, 204, 206 ; 212, 214, 216) in a non-interlinked area (203) extending between its longitudinal ends, the first part (202 ; 212) being located between the second part and the third part (204, 206 ; 214, 216) to which it is connected by weaving at the longitudinal ends of the fiber blank in such a way as to form two interlinking portions (220, 221),
- cutting out the second and third parts (204, 206, 214, 216) to divide said second and third parts into two segments each (204a, 214a ; 206a, 216a),
- forming, from the fiber blank (201), a preform (210) of the vane to be produced, by unfolding, on either side of the first part (202 ; 212), the segments (204a, 214a) of the second part and the segments (206a ; 216a) of the third part not interlinked with the first part, and by shaping the unfolded segments (204a, 214a) of the second part and unfolded segments (206a, 216a) of the third part to form preform parts for a platform (24 ; 26) of the vane to be manufactured (20) in the vicinity of each longitudinal end of the fiber blank, the two interlinking portions (220, 221) between the first, second and third parts extending along the longitudinal axis (X) to form a preform part for an attaching tab (25 ; 27) of the vane to be manufactured (20) at each longitudinal end of the fiber blank,
- densifying the preform by a matrix to obtain a vane (20) made of composite material having an incorporated platform (24 ; 26) and an attaching tab at each longitudinal end aligned with the longitudinal axis of the vane,
- machining attaching tabs at each longitudinal end to form attaching holes..

5. The method as claimed in claim 4, wherein warp yarns (C₁₁, C₁₂ present in the first part (212) in at least one interlinking portion are diverted in the second or third part (214 ; 216) into the non-interlinked area.

6. The method as claimed in claim 4 or 5, wherein the first part (202 ; 212) has a thickness (e₅) greater than the thickness (e₆ ; e₇) of the second and third parts.

7. A fixed turbomachine vane (10) made of composite material comprising a matrix-densified fiber reinforcement, the vane having a blade (12) extending along a longitudinal axis (X) and two platforms (14 ; 16) secured to the blade and respectively present at the two longitudinal ends of the vane, so that the vane further comprises first and second attaching tabs (15, 17) having attaching holes respectively present at each of the longitudinal ends of the vane and extending along the longitudinal axis (X) and in that the fiber reinforcement has a three-dimensional or multilayer weave, the fiber reinforcement comprising a blade preform part (120a) dividing at each of its longitudinal ends into two inner or outer platform preform half-parts (104a, 106a ; 114a, 116a) secured to the blade preform part and an inner or outer attaching tab preform part (102a ; 112a) secured to the blade preform part, each inner or outer attaching tab preform part extending along the longitudinal axis between the inner or outer platform preform half-parts.

8. The vane as claimed in claim 7, wherein warp yarns (C₁, C₂ are diverted into an inner or outer platform preform half-part.

9. The vane as claimed in claim 7 or 8, wherein the blade preform part (120a) of the fiber reinforcement has a thickness (e₁) greater than the thickness (e₂ ; e₃) of the inner or outer platform preform half-parts (104a, 106a ; 114a, 116a).

10. A fixed turbomachine vane (20) made of composite material comprising a matrix-densified fiber reinforcement, the vane having a blade (22) extending in a longitudinal axis and two platforms (24 ; 26) secured to the blade and respectively present at the two longitudinal ends of the vane, so that the vane further comprises first and second attaching tabs (25, 27) having attaching holes respectively present at each of the longitudinal ends of the vane and extending along the longitudinal axis (X) and in that the fiber reinforcement has a three-dimensional weave, the fiber reinforcement comprising a blade preform part (220a) meeting again at each of its longitudinal ends with two inner or outer platform preform half-parts (204a, 206a ; 214a, 216a) secured to the blade preform part in such a way as to form an inner or outer attaching tab preform part (202a ; 212a) secured to the blade preform part, each inner or outer attaching tab preform part extending along the longitudinal axis.

11. The vane as claimed in claim 10, wherein warp yarns (C₁₁, C₁₂ present in the inner or outer attaching tab part of the fiber reinforcement are diverted into an inner or outer platform preform half-part.

12. The vane as claimed in claim 10 or 11, wherein the blade preform part (220a) of the fiber reinforcement has a thickness (e₄) greater than the thickness (e₅ ; e₆) of the inner or outer platform preform half-parts (204a, 206a ; 214a, 216a).
